# EUROPÄISCHE PATENTSCHRIFT

(11) **EP 2 569 202 B1**
(45) Veröffentlichungstag und Bekanntmachung des Hinweises auf die Patenterteilung: **20.01.2016**
(21) Anmeldenummer: 11719167.6
(22) Anmeldetag: 01.04.2011
(51) Int. Cl.: B62D 1/19, F16F 9/53

(54) **REGELVERFAHREN FÜR EINEN STEUERBAREN ENERGIEABSORBER**
CONTROL METHOD FOR A CONTROLLABLE ENERGY ABSORBER
PROCÉDÉ DE RÉGLAGE POUR UN ABSORBEUR D'ÉNERGIE CONTRÔLABLE

(30) Priorität: 10.05.2010 DE 102010020087
(43) Veröffentlichungstag der Anmeldung: 20.03.2013
(73) Patentinhaber: ThyssenKrupp Presta AG, 9492 Eschen (LI)
(72) Erfinder: ELSENSOHN, Gernot, A-6771 St. Anton i.M. (AT); BATTLOGG, Stefan, A-6771 St. Anton i. M. (AT); PÖSEL, Jürgen, A-6700 Bludenz (AT)
(74) Vertreter: Lenzing Gerber Stute
(86) Internationale Anmeldenummer: PCT/EP2011/001646
(87) Internationale Veröffentlichungsnummer: WO 2011/141097

(56) Entgegenhaltungen:
- EP-A1- 2 156 988
- EP-A2- 0 979 768
- US-B1- 6 279 952

## Beschreibung

Die vorliegende Erfindung betrifft ein Verfahren zur Regelung eines Energieabsorbers mit den Merkmalen des Oberbegriffs des Anspruchs 1 oder 2.

Weiter betrifft die Erfindung eine Vorrichtung mit den Merkmalen des Oberbegriffs des Anspruchs 7.

Das generelle technische Gebiet, mit dem sich die vorliegende Erfindung befasst, ist die Verzögerung von Fahrzeuginsassen während eines Aufpralls, insbesondere zur Vermeidung unnötig hoher Beschleunigungskräfte, die auf den Körper des Fahrzeuginsassen einwirken. Dies soll nachfolgend am Beispiel des Fahrers eines Kraftfahrzeugs erläutert werden.

Bei einem Aufprall in Fahrtrichtung wird ein Fahrzeug hohen Verzögerungskräften ausgesetzt. Beispielsweise kann bei einem Frontalaufprall auf ein festes Hindernis eine Verzögerung von 50 km/h zum Stillstand in einer Wegstrecke von einem Meter erfolgen, die dem zur Verfügung stehenden Verformungsweg des Kraftfahrzeugs entspricht. In gleicher Weise wird auch der Fahrer des Kraftfahrzeugs von der Ausgangsgeschwindigkeit auf eine Geschwindigkeit 0 verzögert. Die derzeit verwendeten Sicherheitssysteme in Kraftfahrzeugen, nämlich Sicherheitsgurte und Airbags, sollen dafür sorgen, dass die Verzögerung der betroffenen Fahrzeuginsassen möglichst gleichförmig erfolgt und dass Beschleunigungsspitzenwerte vermieden werden.

Es wird allgemein davon ausgegangen, dass bei Verzögerungen von mehr als 50g die Auswirkungen auf einen menschlichen Körper so groß sind, dass ein entsprechender Aufprall zu tödlichen Verletzungen führt. Dies gilt insbesondere für den Kopf- und Oberkörperbereich. Es werden deshalb zahlreiche technische Lösungen vorgeschlagen und auch eingesetzt, um diese Beschleunigungsbelastungen während eines Unfalls zu minimieren. Eine seit Langem übliche technische Lösung besteht darin, die Fahrzeuge mit zusammenschiebbaren Lenksäulen auszustatten, die mit Energieabsorptionseinrichtungen ausgestattet sind, beispielsweise mit einer teilweise als Gitterrohr ausgeführten Lenkspindel. Bei einem harten Aufprall des Fahrers, mit oder ohne Airbag, auf das Lenkrad wird durch die zusammenschiebbare Lenksäule zum Einen zusätzliche Energie aufgenommen und zum Anderen ein zusätzlicher Weg zur Verfügung gestellt, über den der Fahrer nach einem Aufprall auf das Lenkrad verzögert werden kann. Eine besondere Bedeutung hat die Energieabsorptionseinrichtung der Lenkeinheit insofern, als dass sie im Gegensatz zu Gurt (Fahrer nicht angegurtet) und Airbag (nicht gezündet da Fahrer "out of position") immer wirken kann.

Weitergehende technische Lösungen sind beispielsweise in der DE 60 2004 012 021 T2 genannt. In dieser Druckschrift wird vorgeschlagen, die Lenksäule mit Biegestreifen oder Reißlaschen auszustatten, die bei hohen Aufprallkräften verformt oder durchgerissen werden und dadurch Energie aufnehmen und gleichzeitig zusätzlichen Verformungsweg zur Verfügung stellen.

Da die im Lenksystem abzubauende kinetische Energie von verschiedenen Parametern abhängig ist, insbesondere auch vom Gewicht des Fahrers, von der Sitzposition des Fahrers, von der Art und Weise ob und wie der Sicherheitsgurt angelegt ist und ähnlichen Faktoren mehr, wird in dieser Druckschrift auch vorgeschlagen, das Absorptionsverhalten der Lenksäule zu steuern oder derart zu regeln, dass der Energieabbau entsprechend angepasst wird. Hierzu wird vorgeschlagen, in das Energieabsorptionssystem mehrere Absorptionselemente zu integrieren, wobei mittels eines pyrotechnischen Schalters in der jeweiligen Crashsituation bestimmt wird, wie viele dieser vorhandenen Energieabsorptionsmittel (Biegestreifen oder Reißlaschen) in Eingriff gebracht werden und entsprechend zum Energieabbau beitragen. Diese Lösung weist den Nachteil auf, dass nur in groben Abstufungen eine Anpassung auf die entsprechenden Parameter möglich ist und diese Systeme fertigungsbedingt großen Streuungen unterliegen. Zudem kann eine Anpassung nur einmal vorgenommen werden: ein pyrotechnisch gezündeter Schalter kann nicht zurückgenommen werden, beispielsweise wenn sich im Verlauf des Unfalls Parameter wie Gurtkraft oder Gewichtsverteilung ändern. Außerdem müssen die Parameter gemessen werden, was beispielsweise Sensoren zur Ermittlung des Fahrergewichts erfordert.

In der Druckschrift DE 10313469 A1 wird vorgeschlagen, dieses Problem mit Hilfe eines verformbaren Streifens zu lösen, der als Energieabsorptionsmittel wirkt. Dieser Streifen wird je nach Anforderung unterschiedlich stark umgeformt. Insbesondere ist vorgesehen, dass im Falle eines Aufpralls aufgrund der Verformung des Blechstreifens die Reaktionskraft und das Reaktionsmoment an einem Umformelement eingreift und zur Veränderung der Position des Unformelementes und damit zur Veränderung der Stärke der Umformkraft führt. Auf diese Weise ist eine gewisse Anpassung an die in die Lenksäule eingeleitete Energie möglich. Allerdings ist hier keine hohe Funktionssicherheit gewährleistet, da die Reaktion stark von den jeweiligen vorliegenden Reibungsverhältnissen abhängt. Fertigungsbedingt variierende Abstände/Toleranzen und Materialstreuungen haben großen Einfluss auf die Umformkraft. Weiterhin ist ein Motor vorgesehen, um das Kraftniveau insgesamt einzustellen. Diese technische Lösung ist aufwendig und durch die Mechanik (bewegte Massen) nur mit begrenzter Verstellgeschwindigkeit umsetzbar.

Zur Verbesserung der Ansteuerbarkeit der Energieabsorption werden in der WO 2007002970 und der WO 2007068436 technische Lösungen vorgeschlagen, bei denen beim Zusammenschieben der Lenksäule nach Art eines Dämpfers ein Kolben auf eine Kammer mit einer magnetorheologischen Flüssigkeit drückt. Die magnetorheologische Flüssigkeit wird durch ein entsprechend elektrisch ansteuerbares Ventil gedrückt, das durch sein veränderliches Magnetfeld die Viskosität der magnetorheologischen Flüssigkeit und damit die Widerstandskraft gegen die Bewegung des Kolbens verändert. Dieses Konstruktionselement bietet die Möglichkeit, durch Ansteuerung einer elektromagnetischen Spule im Moment des Aufpralls die Magnetisierung der magnetorheologischen Flüssigkeit zu variieren und damit das Dämpfungsverhalten des Dämpfungsglieds einzustellen. Die Regelgeschwindigkeit und die Einstellgeschwindigkeit der Dämpfungseigenschaften liegt hier im Bereich von etwa 1 Millisekunde, was ausreichend schnell ist, um während der Dauer eines Aufpralls, die im Mittel 30 bis 100 Millisekunden, bevorzugt 1s, beträgt, mehrfach regelnd eingreifen zu können. Ein geeignetes Regelverfahren wird in diesen Druckschriften jedoch nicht vorgeschlagen. Ein solches Verfahren für einen hydraulischen Dämpfer wird in der Druckschrift DE 60009208 T2 vorgeschlagen und offenbart die Präambel der Ansprüche 1, 2 und 7. Auch hier wird zunächst eine Lenksäule zu Grunde gelegt, die entlang eines Verformungsweges in Axialrichtung verfahrbar und zusätzlich verschwenkbar ist. Es wird unter anderem ein durch Magnetfelder steuerbarer magnetorheologischer Dämpfer vorgeschlagen, der während eines Aufpralls hinsichtlich seiner Dämpfungseigenschaften über ein elektrisch erzeugtes Magnetfeld regelbar ist. Das Verfahren sieht jedoch vor, dass die auf den Fahrzeuginsassen wirkende Beschleunigung durch die Dämpfung der Lenksäule derart geregelt wird, dass bestimmte vorgegebene Beschleunigungswerte nicht überschritten werden. So kann beispielsweise über Beschleunigungssensoren, die dem Lenkrad zugeordnet sind, die Beschleunigung gemessen werden und beispielsweise auf 25g begrenzt werden, was in vielen Fällen zur Vermeidung von tödlichen Verletzungen ausreichend ist. Es zeigt sich jedoch, dass gerade bei schweren Unfallverläufen diese Regelung nicht optimal ist, denn während entlang des Verfahrweges der Lenksäule während des Aufpralls eine Beschleunigung unterhalb des vorgegebenen Grenzwerts wirkt, kann es sein, dass diese Beschleunigung nicht zur Verzögerung des Fahrzeuginsassen von der Ausgangsgeschwindigkeit auf 0 ausreicht. In diesem Fall schlägt das Lenkrad am Ende des Verfahrweges oder Kompressionsweges hart an einem Anschlag an. Die dabei auftretende, kurzzeitig wirkende Beschleunigung überschreitet dann möglicherweise sowohl den vorgewählten Grenzwert für die Regelung der Energieabsorptionsvorrichtung als auch die Obergrenze von ca. 50 G, ab der tödliche Verletzungen zu erwarten sind. In der Konsequenz bedeutet dies, dass die in der genannten Druckschrift vorgeschlagene Regelung für mittlere Unfallverläufe das Verletzungsrisiko minimiert, bei schweren Unfallverläufen aber das Risiko von tödlichen Verletzungen nicht in optimaler Weise verringert.

Hier ist nun Aufgabe der vorliegenden Erfindung, ein Regelverfahren für einen hydraulischen Energieabsorber auf Basis einer magnetorheologischen Flüssigkeit in einer Insassenschutzvorrichtung insbesondere für Kraftfahrzeuge zu schaffen, mit dem das Auftreten von Beschleunigungsspitzenwerten am Ende des Verfahrweges der Energieabsorptionsvorrichtung, beispielsweise einer Lenksäule, vermieden wird. Das erfindungsgemäße Verfahren ermöglicht trotz eines relativ einfachen Aufbaus den hydraulischen Dämpfer bzw. Energieabsorber so anzusteuern, dass der Fahrer innerhalb der Systemgrenzen stets optimal, also möglichst konstant und mit möglichst geringer Kraft, so verzögert wird, dass seine Relativgeschwindigkeit am Ende des Verfahrweges 0 ist.

Diese Aufgabe wird mit einem Verfahren mit den Merkmalen des Anspruchs 1 oder 2 gelöst. In den Unteransprüchen sind vorteilhafte Weiterbildungen der Erfindung dargestellt.

Weil im Crashfall die Relativgeschwindigkeit zwischen einem ersten, mit dem Lenkrad beweglichen Teil der Lenksäule und einem zweiten karosseriefesten Teil der Lenksäule kontinuierlich oder in Intervallen gemessen wird, dann die für die Abbremsung aus der gemessenen Geschwindigkeit bis zum Ende des Verformungsweges erforderliche Brems-Beschleunigung berechnet wird und schließlich daraus der Ansteuerstrom für die mindestens eine Spule der steuerbare Dämpfungseinheit so angesteuert wird, dass das Magnetfeld der Spule zu einer Viskosität der magnetorheologischen Flüssigkeit führt, so dass diese Verzögerung angenähert erreicht wird, ist sichergestellt, dass auch bei schweren Unfallverläufen die Relativgeschwindigkeit des verlagerbaren Teils der Lenksäule, die sich im Wesentlichen mit der selben Geschwindigkeit bewegt, wie der darauf aufprallende Fahrzeuginsasse, in dem Maße abgebaut wird, dass am Ende des zur Verfügung stehenden Kompressionsweges die Relativgeschwindigkeit zu 0 wird oder einen bestimmten Grenzwert nicht überschreitet, wodurch das Auftreten einer Beschleunigungsspitze am Ende des Verfahrweges der Lenksäule auftritt.

Möglich ist auch, dass der Regler anfangs aus der Startgeschwindigkeit und dem Verzögerungsweg das Geschwindigkeitsprofil errechnet, nach welchem die Geschwindigkeit zeit- oder wegabhängig verlaufen muss, um am Wegende 0 zu erreichen. Im Verlauf der Bewegung passt der Regler die Gegenkraft des Energieabsorbers so an, dass Soll- und Istgeschwindigkeit übereinstimmen.

Es ist denkbar, dass das Geschwindigkeitsprofil im Bewegungsverlauf abhängig von Zeit, Weg oder sonstigen Parametern aktualisiert, also neu berechnet wird.

Mit Vorzug wird der zum Stillstand am Ende des Verfahrweges erforderliche Geschwindigkeitsverlauf abhängig von dem Verfahrweg oder abhängig von der Verfahrzeit berechnet.

In einer weiteren Variante wird bei dem Verfahren die Relativgeschwindigkeit und/oder der noch verfügbare Verfahrweg aus den Signalen von zumindest zwei Beschleunigungssensoren ermittelt werden, wobei zumindest ein Beschleunigungssensor auf dem verschiebbaren Teil der Lenksäule und zumindest ein weiterer Beschleunigungssensor karosseriefest angebracht sind.

Eine weitere Ausführungsform sieht vor, die für die Regelung benötigten Positions-, Weg-, Geschwindigkeits- und/oder Beschleunigungswerte direkt oder indirekt über andere physikalische Größen von zumindest einem Sensor zu ermitteln.

Es ist auch zu bevorzugen, die Regelung der Verzögerung autonom, also ohne Verbindung zu sonstigen Rückhaltesystemen, Steuergeräten oder Sensoren, darzustellen. Insbesondere kann das Verfahren zur Regelung in ein vorhandenes Steuergerät wie zum Beispiel das Airbag-Steuergerät integriert sein.

Es ist auch denkbar und möglich, das Regelverfahren zu optimieren, indem eine Kommunikation der Steuerung mit anderen Rückhaltesystemen, Steuergeräten und/oder Sensoren vorgesehen ist. Dadurch wird es ermöglicht, die Regelung des Energieabsorbers gemeinsam mit anderen Rückhaltesystemen zu kombinieren und die Verzögerung so anzusteuern, dass die Belastung des Fahrers minimiert wird. Hierzu kann mit Vorzug eine übergeordnete Steuerung Vorgabewerte für die Steuerung des Energieabsorbers vorgeben und/oder die Regelung der Kraft des Energieabsorbers direkt übernehmen.

Auch wenn bei diesem Regelverfahren gegenüber dem Stand der Technik höhere Beschleunigungswerte auf den Fahrzeuginsassen einwirken können, wird doch vermieden, dass über den Verfahrweg eine relativ geringe Beschleunigung auf den Insassen wirkt, die verbleibende kinetische Energie aber am Ende des Verfahrweges durch den harten Aufprall eine zu schwersten Verletzungen führende Beschleunigungsspitze erzeugt. Die Wahrscheinlichkeit, einen schweren Unfallverlauf zu überleben, wird durch dieses Regelverfahren gegenüber dem Stand der Technik erhöht.

Die oben genannte Aufgabe wird auch durch eine Vorrichtung mit den Merkmalen des Anspruchs 17 gelöst. Weil zur Bestimmung der relativen Position des fahrerseitigen Teils der Lenksäule und des karosserieseitigen Teils der Lenksäule ein zur Aufnahme des Weges geeigneter Sensor vorgesehen ist, kann während des Unfalls die Position des verschiebbaren Teils der Lenksäule entlang des Verfahrweges gemessen werden und aus dem zeitlichen Verlauf dieser Position die Relativgeschwindigkeit und daraus schließlich die zum Abbremsen des Fahrzeuginsassen bis zum Endanschlag der Lenksäule erforderliche Verzögerung berechnet werden. Auf diese Weise kann das Stromsignal berechnet werden, das erforderlich ist, um mittels einer Regelung des Spulenstroms der Dämpfungseinheit den Fahrer in der Weise abzubremsen, dass die Brems-Beschleunigung bzw. Verzögerung bzw. Beschleunigung gerade so hoch ist, wie es bis zur vollständigen Abbremsung nötig ist und keine Kraftspitzen auftreten.

Bei dem Sensor handelt es sich vorzugsweise um einen digitalen Wegsensor, so dass jede Wegänderung unmittelbar und ohne Rechenaufwand erfasst werden kann. Dadurch kann beispielsweise gegenüber einem potentiometrischen Wegsensor auf einen A/D-Wandler zur Signalwandlung verzichtet werden. In einer anderen Ausführungsform kann vorgesehen sein, dass sowohl der verfahrbare Teil als auch der karosseriefeste Teil der Lenksäule mit einem Beschleunigungssensor versehen sind, wobei aus der Differenz der erfassten Beschleunigungen während des Aufpralls der Weg und die Geschwindigkeit des fahrerseitigen Lenksäulenteils relativ zum karosseriefesten Lenksäulenteil errechnet werden kann. Dieses Verfahren ist aufwendiger, bietet durch die Integration der Beschleunigung jedoch rauschärmere Geschwindigkeits- und Wegwerte (durch Ableiten eines Wegsignals wird das Rauschen verstärkt). Auch weitere Verfahren zur direkten oder indirekten Bestimmung von Position, Weg, Geschwindigkeit oder Beschleunigung können angewendet werden, wobei diese in Folge als "Wegsensor" bezeichnet werden.

Vorzugsweise wird ein Wegsensor eingesetzt, der die lineare Bewegung in eine Drehbewegung wandelt und der als optischer Encoder oder als magnetischer Drehgeber ausgelegt ist. Magnetische Drehgeber sind insbesondere in Kraftfahrzeugen seit Langem erprobt, beispielsweise in Antiblockiersystemen zu Erfassung der Raddrehzahl.

Für die Regelung ist es möglich den Sensor nicht mit einer fixen Abtastfrequenz auszulesen sondern die Abtast- und / oder Regelfrequenz auf die tatsächliche Verfahrgeschwindigkeit anzupassen. Das kann soweit ausgebaut werden, bis der Regler nicht mehr zeitsynchron sondern weggesteuert arbeitet. Dazu triggert jeder Wegschritt bzw. ein Vielfaches jeden Wegschritts des (digitalen) Wegsensors einen Regelzyklus, die Zeit zwischen den Wegschritten ermöglicht die Berechnung von Geschwindigkeit und Beschleunigung. Wesentlicher Vorteil dieses Verfahrens ist, dass die Auflösung des Wegsensors verhältnismäßig grob sein kann, was die Serienumsetzung aufgrund geringerer Herstellkosten deutlich erleichtert. Die zeitliche Auflösung der Prozessorinternen Zeit lässt sich sehr einfach variieren und bei Bedarf verhältnismäßig günstig vergrößern, z.B. durch eine höhere Taktfrequenz.

Das ganze erfindungsgemäße Verfahren kann also mit nur einem Sensor umgesetzt werden, wobei der entsprechende Sensor vergleichsweise einfach, robust und kostengünstig umgesetzt werden kann. Weitere Sensoren oder Schnittstellen zu vorhandenen Steuergeräten sind nicht erforderlich.

Wenn der steuerbare Energieabsorber koaxial in der Lenksäule angeordnet ist, ist der Wegsensor vorzugsweise unmittelbar dem Energieabsorber zugeordnet, so dass auch bei Verformungen der Lenksäule das Wegsignal präzise den verbrauchten und den noch zu Verfügung stehenden Verzögerungsweg repräsentiert.

Ein elektronisches System ist zur Regelung der Energieabsorption erforderlich. Dieses System umfasst zum Einen einen Mikrocontroller, der zur Berechnung der Regelgröße aus den Sensorsignalen geeignet programmiert ist, und zum Anderen eine Leistungselektronik, die den Spulenstrom so regelt, dass die berechneten Verzögerungswerte zumindest annähernd erreicht werden. Hierbei kann vorgesehen sein, dass die magnetorheologische Flüssigkeit durch einen Permanentmagneten mit einem Magnetfeld beaufschlagt wird, das einer mittleren Dämpfungskraft entspricht. Die Leistungselektronik muss dann über die Spule gegebenenfalls ein verstärkendes oder ein schwächendes Magnetfeld aufbauen, um die Dämpfung den Anforderungen anzupassen. Es muss nicht das gesamte Magnetfeld elektrisch erzeugt werden. Im Fehlerfall ist durch das Permanentmagnetfeld noch eine mittlere Dämpfung gegeben, wodurch eine definierte Notlauffunktion einstellbar ist, deren Kraft im Wesentlichen einem einstufigen System nach dem Stand der Technik entspricht.

Es kann weiter vorgesehen sein, dass die Elektronik sich während des normalen Betriebs des Kraftfahrzeugs in einem Ruhezustand befindet und dass die Elektronik nur im Crashfall überhaupt aktiviert wird, beispielsweise durch das Airbagsteuergerät. Dies kann in der Weise erfolgen, dass das Airbagsteuergerät zunächst den Airbag auslöst, der zur seiner Entfaltung eine gewisse Zeit benötigt und dann die Regelung der Energieabsorptionsvorrichtung startet.

Dies hat den Vorteil, dass kein unnötiger Energieverbrauch durch ständigen Betrieb der Regelungsvorrichtung entsteht. Es kann auch vorgesehen sein, die Energieabsorptionsvorrichtung durch das Airbagsteuergerät selbst zu regeln, da das Steuergerät nach der Auslösung des Airbags ohnehin funktionslos geworden ist und seine Rechenleistung sowie die daran angeschlossenen Sensoren weiterhin verfügbar sind.

Ein besonderer Vorteil des erfindungsgemäßen Verfahrens ist, dass mögliche Störgrößen wie Kraftschwankungen durch ungleichmäßigen Reibungswiderstand in Führungen oder ungleichmäßige Gurtkraft, temperaturbedingte Viskositätsschwankungen, fertigungsbedingte Bauteiltoleranzen usw. automatisch berücksichtigt und innerhalb der Systemgrenzen durch eine angepasste Kraft des Energieabsorbers ausgeglichen werden.

Auch Änderungen der Unfallparameter während des Verzögerungsvorgangs werden, solange nicht das Ende des Verfahrwegs erreicht ist, berücksichtigt.

Nachfolgend wird die vorliegende Erfindung anhand der Zeichnungen näher beschrieben. Es zeigen:
- Figur 1:: eine erfindungsgemäße Lenksäule mit einem geregelten Energieabsorber;
- Figur 2:: einen Ausschnitt aus einem Energieabsorber entsprechend der Figur 1;
- Figur 3:: den optimalen zeitlichen Verlauf der Relativgeschwindigkeit von der Aufprallgeschwindigkeit bis zum Stillstand;
- Figur 4:: den zeitlichen Ablauf eines Unfalls mit Frontalaufprall auf ein Hindernis, und zwar beispielhaft die von der variabel steuerbaren Energieabsorptionsvorrichtung aufgebaute Gegenkraft sowie die von der herkömmlichen Mechanik aufgebaute Gegenkraft; sowie
- Figur 5:: ein Blockdiagramm der verwendeten Regelung.

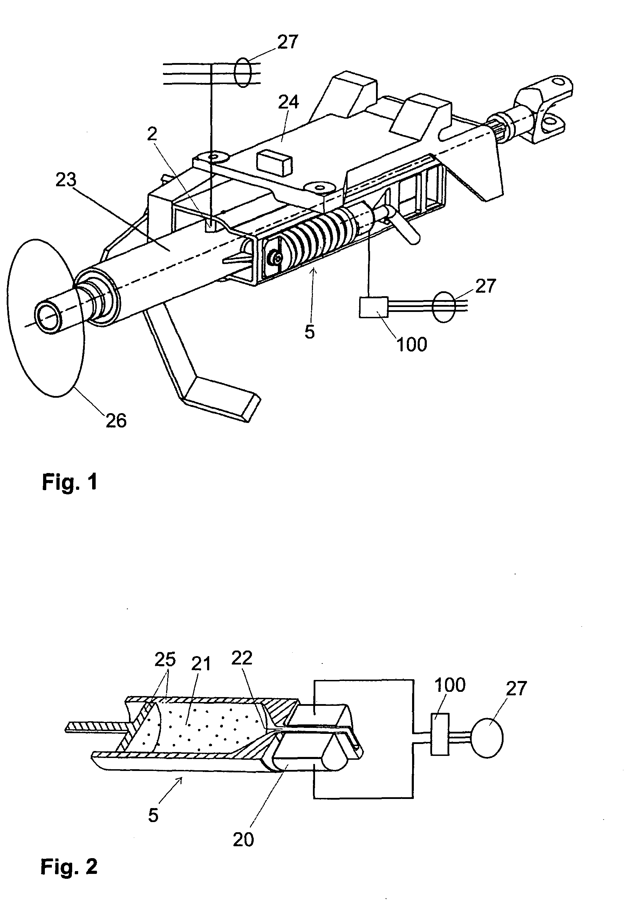

Die Figur 1 zeigt eine Lenksäule, bei der das verschiebbare Lenksäulenteil 23 mit einem karosseriefesten Lenksäulenteil 24 an der nicht dargestellten Fahrzeugkarosserie gehalten ist. Im Falle eines Aufpralls (Crash) wird durch den Aufprall des Fahrers auf das schematisch dargestellte Lenkrad 26 das verschiebbare Lenksäulenteil 23 gegenüber dem karosseriefesten Lenksäulenteil 24 in seiner Längsrichtung verschoben. Der Energieabsorber 5 ist mit seinem einen Ende am verschiebbaren Lenksäulenteil 23 und mit seinem anderen Ende am karosseriefesten Lenksäulenteil 24 befestigt.

Figur 2 zeigt einen Schnitt durch einen Energieabsorber 5. Dieser weist eine Kolben-Zylindereinheit 25 auf, die mit einer magnetorheologische Flüssigkeit 21 gefüllt ist. Im Crash wird der Kolben durch gegenüber dem Zylinder verschoben, so dass die magnetorheologische Flüssigkeit durch die Engstelle 22 in einen Austrittskanal gedrückt wird. Die Viskosität der magnetorheologischen Flüssigkeit 21 kann durch das Magnetfeld der Spule 20 verändert werden, wodurch sich auch die Kraft auf die Kolben-Zylindereinheit 25 und somit die Verzögerung der bewegten Massen Fahrer, Lenkrad 26 und verschiebbares Lenksäulenteil 23 verändern lässt. Der Spulenstrom wird von einer Steuerung 100 bestimmt.

Ein Wegsensor 2 misst den Verfahrweg des verschiebbaren Lenksäulenteils 23 gegenüber dem karosseriefesten Lenksäulenteil 24. Über einen Sicherheits-Bus 27 wird die Weginformation zur Steuerung 100 übermittelt. Die Steuerung 100 bestimmt anhand der Weginformation des Wegsensors 2 den notwendigen Strom zur Bestromung der Spule 20 um die gewünschte Verzögerung des Energieabsorbers 5 einzustellen.

Durch zusätzliche Sensoren kann der Regler besser auf die Strecke angepasst werden. Über den Spulenwiderstand kann z.B. die Temperatur der magnetorheologischen Flüssigkeit bestimmt und eine dementsprechende Regelungsanpassung durchgeführt werden.

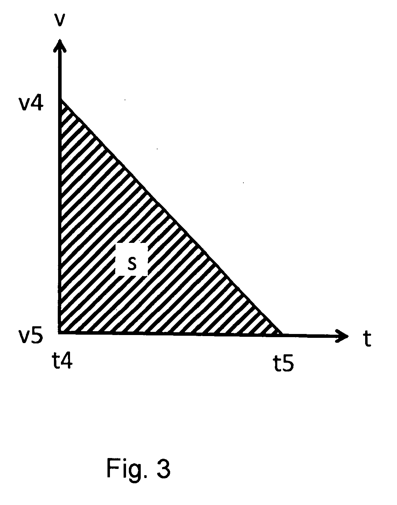

In der Figur 3 ist als Diagramm auf der Abszisse (x-Achse) die Zeit t aufgetragen, die bei gleichmäßiger Verzögerung für den Verfahrweg benötigt wird. Auf der Ordinate (y-Achse) ist die Geschwindigkeit v aufgetragen. Ziel der Regelung ist es, die Ausgangsgeschwindigkeit v4 beim Zeitpunkt t4 entlang einer möglichst geraden Linie bis zum Stillstand (v5 = 0) beim Zeitpunkt t5 zu reduzieren, der am Ende des verfügbaren Verfahrweges s erreicht sein muss. Der verfügbare Verfahrweg s entspricht dabei der im Diagramm eingeschlossenen Fläche. Die Steigung der Linie zeigt die dafür erforderliche Beschleunigung bzw. Verzögerung an. Eine gerade Linie bedeutet eine über den Verfahrweg konstante Verzögerung, die direkte Verbindung zwischen der Ausgangsgeschwindigkeit v4 und dem Punkt v5 = 0 definiert die kleinstmögliche Verzögerung, bei der die Geschwindigkeit v4 über die Strecke s auf 0 verzögert werden kann. Die Verzögerung a ist folglich nur von der Ausgangsgeschwindigkeit und dem Bremsweg s abhängig.

Die für eine bestimmte Verzögerung a notwendige Kraft F ist jedoch von der bewegten Masse abhängig (F = m * a). Kennt der Regler die bewegte Masse, kann die Regelung stark vereinfacht und der Verzögerungsverlauf optimiert werden. Der Regler kann aber auch völlig autonom aufgebaut werden, das heißt ihm ist zu Crashbeginn nur der Weg bekannt. Für die Berechnung fehlende Parameter muss sich der Regler aus dem Wegsignal und der prozessorintern vorhandenen Zeit erarbeiten. Dabei gilt: je kleiner der Dynamikbereich (Bereich mögliche Geschwindigkeiten und Massen) des Reglers sein muss, desto besser kann der Regler dem optimalen Kurvenverlauf folgen.

Es ist ersichtlich, dass bei hohen Aufprallgeschwindigkeiten über den gesamten Weg eine gleich hohe Verzögerung erforderlich ist, um das Ziel zu erreichen. Wird die Verzögerung begrenzt, so verläuft die Zeit-/Geschwindigkeitskurve flacher und es entsteht am Ende des verfügbaren Crashweges eine Restgeschwindigkeit, die zu einem harten Aufprall führt.

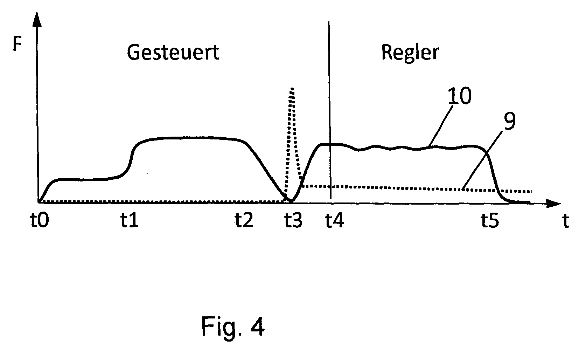

Die Figur 4 zeigt in einem Beispiel den zeitlichen Verlauf der auf den Energieabsorber 5 wirkenden Gegenkräfte vom Beginn eines Unfallgeschehens an. In diesem Beispiel ist dem Regler eine Steuerkurve überlagert, was die Kommunikation der Regelung mit anderen Steuergeräten und Sensoren voraussetzt.

Auf der Abszisse ist die Zeit t aufgetragen, die Ordinate stellt die Kraft F dar. Der mechanische Kraftverlauf 9 veranschaulicht die durch die Lenksäule aufgebrachten Gegenkräfte gegen die, durch den Aufprall des Fahrers verursachte, Verschiebung des verschiebbaren Teils der Lenksäule. Der Energieabsorber-Kraftverlauf 10 veranschaulicht die durch die Bestromung der Spule des Energieabsorbers bereitgestellte Gegenkraft gegen eine Verschiebung des verschiebbaren Teils der Lenksäule.

Zum Zeitpunkt t0, der möglicherweise vor dem tatsächlichen Aufprall liegt, stellen die fahrzeuginternen Sicherheitssysteme fest, dass es einen Unfall gibt. Die ersten Sicherheitsaktoren werden betätigt, beispielsweise die Gurtstraffer, die Sitzverstellung und dergleichen. Der Energieabsorber 5 baut bereits eine höhere Dämpfungskraft auf, um ein Verfahren der Lenksäule 23 durch Trägheit zu verhindern.

Bei der Zeit t1 wird der Airbag gezündet. Die Gegenkraft des Energieabsorbers 5 wird zuvor nochmals erhöht, um das Verfahren der Lenksäule durch den entstehenden Impuls der Auslösung des Airbags zu verhindern.

Bei der Zeit t2 errechnet die Steuerung 100 den bevorstehenden Aufprall des Fahrers auf das Lenkrad 26, der möglicherweise durch Informationen aus dem Sicherheitsgutsystem angekündigt wird. Das Lenkrad 26 und die Lenksäule 23 selbst setzen durch ihre Massenträgheit und Reibungskräfte dem Aufprall des Fahrers bereits eine Kraft 9 entgegen, zu der sich die Kraft des Energieabsorbers 10 addiert. Um die Gesamtkraft zu begrenzen, die auf den Fahrer wirkt, wird in diesem Moment die Dämpfungskraft des Energieabsorbers 10 reduziert. Gegenüber dem Stand der Technik kann die Belastung des Fahrers deutlich gesenkt werden, da auf ein Losbrechelement verzichtet werden kann.

Die Steuerung 100 erhöht gleich nach dem Aufprall die Dämpfungskraft des Energieabsorbers 5 auf einen aus den vorliegenden Unfallparametern berechneten Startwert.

Bei der Zeit t4 ist der Bereich der gleichförmigen Verzögerung des Fahrers erreicht, der Regler übernimmt die Berechnung der optimalen Verzögerung auf Basis der Daten des Wegsensors 2 bis zum Stillstand. Die Gegenkraft des Energieabsorbers 5 wird permanent kontrolliert und angepasst. Der Übergang von der Steuerung zur Regelung kann fließend sein oder auch abrupt in Abhängigkeit von der Zeit, dem Weg, der Signalqualität und dem Ergebnis der internen Regelalgorithmen erfolgen.

Bei der Zeit t5 ist der Stillstand des verfahrbaren Teils der Lenksäule 23 gegenüber dem karosseriefesten Teil 24 erreicht, ohne dass es zu einem Anschlag aufgrund einer verbleibenden Restgeschwindigkeit kommt. Im optimalen Fall wird genau beim Erreichen des Endes der verfügbaren Wegstrecke die Relativgeschwindigkeit zu 0.

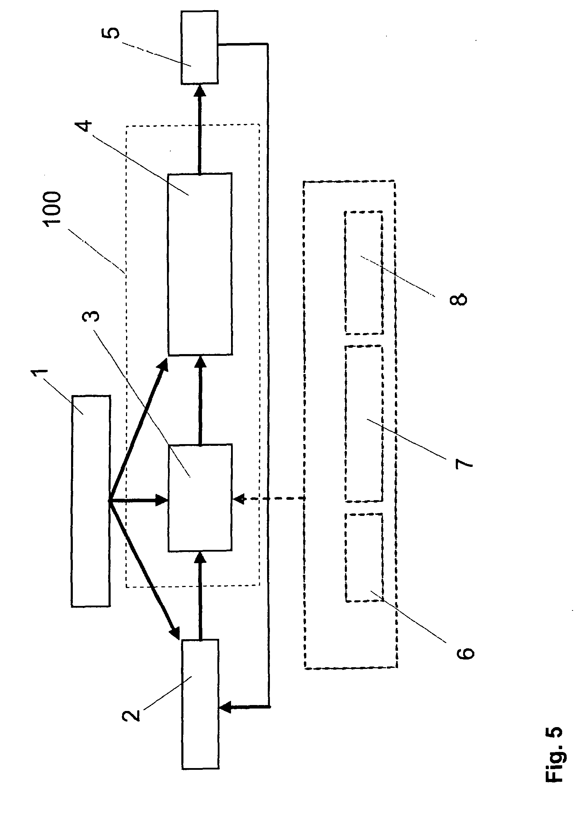

Die Figur 5 zeigt das Regelungssystem der vorliegenden Erfindung als Blockschaltbild. Es ist zunächst eine Spannungsversorgung 1 vorgesehen, die einen Wegsensor 2, einen Mikrocontroller 3 und eine Leistungselektronik 4 mit elektrischem Strom versorgt. Die Leistungselektronik 4 und der Mikrokontroller 3 bilden die Steuerung 100, die in den Figuren 1 und 2 dargestellt sind. In an sich bekannter Weise kann die Versorgung aus dem Bordnetz des Kraftfahrzeugs erfolgen, wobei ein Energiespeicher wie ein Kondensator oder separater Akku vorgesehen sein kann, der die kurzzeitig hohen Belastungen durch die Leistungselektronik, auch im Falle eines Unterbruchs der Energieversorgung aus dem Bordnetz, bereitstellt. Dieser Kondensator soll dann so ausgelegt sein, dass die Versorgung der Leistungselektronik und dessen Mikrocontrollers über mindestens 100 Millisekunden sichergestellt ist. Die Leistungselektronik 4 wiederum steuert einen steuerbaren Energieabsorber 5 an. Der steuerbare Energieabsorber 5 ist, wie bereits oben beschrieben, im Wesentlichen als hydrodynamischen Stossdämpfer mit einer magnetorheologischen Flüssigkeit ausgebildet, so dass die Dämpfungskraft über ein externes Magnetfeld steuerbar ist, wobei das Magnetfeld über den Strom durch eine Spule variierbar ist. Die Ausbildung kann dabei dem Stand der Technik entsprechend ausgebildet sein, der beispielsweise in der WO 2007/068436 A1 und der DE 60009208 T2 dargestellt ist.

Zusätzliche mögliche Komponenten umfassen eine Triggervorrichtung 6, die den Mikrocontroller im Bedarfsfall startet, sowie eine Kommunikationseinheit 7 und eine Telemetrieeinheit 8, die nachfolgend genauer beschrieben werden.

Die Versorgung 1 soll vorzugsweise autonom arbeiten und genügend Pufferkapazität aufweisen, um während eines Unfalls Sensoren und Elektronik zu versorgen. Ein Kondensator bietet sich als Energiespeicher an, da dieser kurzfristig relativ viel elektrische Energie verfügbar macht. Es kann auch vorgesehen sein, separate Batterien oder Akkumulatoren vorzusehen, die eventuell auch für zusätzliche weitere Sicherheitsaktoren vorgesehen sind. Eine höhere Versorgungsspannung, beispielsweise 24 Volt, 48 Volt oder mehr, ermöglicht die Speicherung von mehr Energie auf kleinerem Bauraum (E = (C * U²) / 2). Bei höherer Versorgungsspannung kann auch die Leistungselektronik wegen der Induktivität der elektromagnetischen Spule des Energieabsorbers schneller reagieren. Das Laden und die Zustandsüberwachung des Energiespeichers kann durch den Mikrocontroller 3 vorgenommen werden.

Der Wegsensor 2 sollte vorzugsweise eine hohe Auflösung haben und störsicher sein. Die Wegmessung erfordert eine hohe Dynamik. Bei langsamer Verfahrgeschwindigkeit am Ende des Verfahrwegs soll noch genügend Information generiert werden, um den Weg bei der entsprechenden Abtastfrequenz mit ausreichender Genauigkeit auflösen zu können. Bei hohen Verfahrgeschwindigkeiten am Anfang des Verfahrweges, die typischerweise etwa 10 m/sec. erreichen können, soll der Wegsensor 2 entsprechend schnell reagieren.

Durch die relativ hohe Verfahrgeschwindigkeit am Anfang eignen sich potentiometrische Sensoren weniger. Die lineare Bewegung kann in eine Rotation umgesetzt werden, die auch eine Übersetzung umfassen kann. Digitale Sensoren sind in diesem Einsatzbereich störsicherer als analoge Sensoren. Hierdurch wird auch eine zusätzliche Analog/Digital-Wandlung eingespart, was Rechenzeit, Kosten und die begrenzte Auflösung solcher internen A/D-Wandler umgeht. Eingesetzt werden können beispielsweise Magnetbandsensoren oder sonstige induktive, resistive oder kapazitive Sensoren, besonders vorteilhaft sind jedoch optische Encoder oder magnetische Drehgeber.

Der Mikrocontroller 3 muss geeignet sein, die entstehende hohe Dynamik verarbeiten zu können, die oben im Zusammenhang mit dem Wegsensor bereits erläutert wurde. Im einfachsten Falle reicht ein Mikrocontroller mit digitalen Eingängen und Ausgängen und einem internen Timer aus. Die Steuerung des Energieabsorbers 5 soll jedoch über eine Pulsweitenmodulation erfolgen, wobei ein interner PWM-Block hilfreich sein kann, da er den Prozessor entlastet.

Es können auch weitere Encoder-Eingänge, zusätzlicher Speicher und Kommunikationsschnittstellen vorgesehen sein. Je nach Anwendung kann die Umsetzung des Reglers in einer speziellen Hardware wie DSP, FPGA, ASIC und anderen vorteilhaft sein.

Anstelle eines Reglers als Code in einem Mikrocontroller zu programmieren ist es vorstellbar, den Regler diskret aufzubauen. Durch geeignete Beschaltung von Verstärkern, Widerständen und Kondensatoren, sowie weiteren Bauelementen lässt sich das erfindungsgemäße Verfahren auch als Hardware aufbauen.

Die Leistungselektronik 4 verstärkt das von dem Mikrocontroller 3 erzeugte pulsweitenmodulierte Signal. Bei langen Zuleitungen und hohen Anforderungen an die Störsicherheit kann die Leistungselektronik galvanisch von der Ansteuerung getrennt sein und mit einer lokal gepufferten Stromversorgung versehen sein. Bevorzugt wird ein einfacher Aufbau der Leistungselektronik 4 mit einem Schalt-FET und einer Freilaufdiode. Weitere Ausbaustufen können als Halb- oder Vollbrücke erfolgen. Es ist auch möglich, in die Leistungselektronik weitere Komponenten zu integrieren, die der Zustandsüberwachung der Vorrichtung dienen können, einer weiteren Messwerterfassung für Strom, Spannung oder Temperatur, oder beispielsweise auch der Heizung des Energieabsorbers.

Der steuerbare Energieabsorber 5 soll wie oben beschrieben möglichst starr mit der Wegmessung gekoppelt sein. Vorzugsweise kann der Wegsensor 2 in den Energieabsorber 5 integriert sein. Es sollte eine Ausführung verwendet werden, die hinsichtlich des Energiebedarfs und der Reaktionsgeschwindigkeit optimiert ist.

Die optionalen Komponenten können den Trigger 6 umfassen. Dieser kann als zusätzliche Sicherheit vorgesehen sein, um eine falsche Auslösung des Energieabsorbers 5 zu verhindern und die maximale Einschaltzeit zu begrenzen, damit beispielsweise bei Softwarefehlern die elektrisch stark belastete Hardware keinen Schaden nimmt. Es ist, wie oben beschrieben, auch vorteilhaft, wenn das System erst bei einem tatsächlich erkannten Aufprall aktiviert wird. Der im Ruhezustand geringere Energiebedarf schont die Komponenten und lässt dem Mikrocontroller auch Zeit für die Übernahme anderer Aufgaben, wie zum Beispiel der Selbstüberwachung, der oben beschriebenen Ladung der Kondensators oder der Überwachung der Spannungsversorgung 1.

Es ist möglich, das System bis auf die Stromversorgung vollkommen autonom zu gestalten. Die in dem System ablaufende Selbstüberwachung kann mögliche Fehler beispielsweise mit einer Kontrollleuchte dem Anwender signalisieren. Vorteilhaft ist, wenn der Mikrocontroller 3 über ein Kommunikationsmodul 7 mit anderen Systemen des Kraftfahrzeugs kommunizieren kann und beispielsweise in einen Sicherheits-Bus 27 eingebunden ist. Der Sicherheits-Bus 27 kann auch die Verbindung zwischen dem Wegsensor 2 und der Steuerung 100 bereitstellen, wie dies in der Figur 1 schematisch veranschaulicht ist. Darüber hinaus können intelligente Rückhaltesysteme über den Sicherheits-Bus 27 miteinander kommunizieren und versuchen, die Unfallfolgen im System insgesamt zu minimieren. So kann beispielsweise der Sicherheitsgurt über geeignete Sensoren die Verzögerung des Fahrers ermitteln und dadurch dem Mikrocontroller 3 bereits einen Startwert für die Verzögerung vorgeben. Auch bei der Fehlerdiagnose und der Zustandsüberwachung ist es von Vorteil, wenn der Mikrocontroller 3 über ein Kommunikationsmodul 7 an die sonstigen Systeme angebunden ist. So kann auch der Zustand des Systems über ein Werkstattdiagnosegerät ausgelesen werden.

Das Telemetriemodul 8 kann die zur Verfügung stehenden Daten anderer Fahrzeugsysteme oder auch von anderen in den Unfall involvierten Fahrzeugen (WLAN, Mobilfunk, LTE) auswerten und dem Mikrocontroller 3 mitteilen. Auf diese Weise können wichtige Parameter wie zum Beispiel Unfallart, Unfallschwere, Fahrergewicht und Fahrerposition noch vor dem Aufprall auf das Lenkrad mitgeteilt werden worauf die Regelparameter angepasst werden können. Der Regler kann dadurch schon am Beginn des Regelvorgangs in die Nähe des optimalen Kurvenverlaufs gebracht werden, was die Belastung des Fahrers abermals verringert.

Die Regelung weist vorzugsweise auch die Fähigkeit auf, bereits vor dem Aufprall des Fahrers auf das Lenkrad eine erhöhte Dämpfungskraft des Energieabsorbers 5 einzustellen, so dass das Lenkrad entgegen seiner eigenen Massenträgheit zu Beginn des Aufpralls am Anfang des Verfahrweges fixiert werden kann und nicht ein Teil des Verfahrweges bereits durch die Massenträgheit am Beginn des Aufpralls verbraucht wird.

### Bezugszeichenliste

- 1.: Spannungsversorgung
- 2.: Wegsensor
- 3.: Mikrocontroller
- 4.: Leistungselektronik
- 5.: Energieabsorber
- 6.: Triggervorrichtung
- 7.: Kommunikationseinheit
- 8.: Telemetrieeinheit
- 9.: Kraftverlauf Mechanik
- 10.: Kraftverlauf Energieabsorber

- 20: Spule
- 21: Magnetorheologische Flüssigkeit
- 22: Engstelle
- 23: verschiebbares Lenksäulenteil
- 24: karosseriefestes Lenksäulenteil
- 25: Kolben-Zylindereinheit
- 26: Lenkrad
- 27: Sicherheits-Bus
- 100: Steuerung

## Patentansprüche

1. Regelverfahren für einen steuerbaren Energieabsorber (5) in einem Lenksystem für ein Kraftfahrzeug, wobei in dem Energieabsorber ein Stromfluss in einer Spule (20) regelbar ist, die die Viskosität einer magnetorheologischen Flüssigkeit (21) des steuerbaren Energieabsorbers ansteuert, wobei der Energieabsorber während eines Unfalls als hydraulischer Dämpfer zwischen zwei zueinander bewegbaren Teilen (23, 24) wirkt, dessen Dämpfungskraft durch den Stromfluss durch die Magnetspule bestimmt ist, **dadurch gekennzeichnet, dass** folgende Schritte vorgesehen sind:
- die Relativgeschwindigkeit zwischen einem ersten, mit dem Lenkrad (26) beweglichen Teil (23) der Lenksäule und einem zweiten karosseriefesten Teil (24) der Lenksäule wird kontinuierlich oder in Intervallen ermittelt,
- die für die Abbremsung aus der gemessenen Relativgeschwindigkeit zum Stillstand bis zum Ende des Verfahrweges erforderliche Beschleunigung wird berechnet,
- aus der berechneten Beschleunigung wird der Stromfluss derart berechnet, dass beim weiteren Verfahren der zueinander bewegbaren Teile der Wert der berechneten Beschleunigung angenähert erreicht wird.

2. Regelverfahren für einen steuerbaren Energieabsorber (5) in einem Lenksystem für ein Kraftfahrzeug, wobei in dem Energieabsorber ein Stromfluss in einer Spule (20) regelbar ist, die die Viskosität einer magnetorheologischen Flüssigkeit (21) des steuerbaren Energieabsorbers ansteuert, wobei der Energieabsorber während eines Unfalls als hydraulischer Dämpfer zwischen zwei zueinander bewegbaren Teilen (23, 24) wirkt, dessen Dämpfungskraft durch den Stromfluss durch die Magnetspule bestimmt ist, **dadurch gekennzeichnet, dass** folgende Schritte vorgesehen sind:
- die Relativgeschwindigkeit zwischen einem ersten, mit dem Lenkrad beweglichen Teil (23) der Lenksäule und einem zweiten karosseriefesten Teil (24) der Lenksäule wird kontinuierlich oder in Intervallen ermittelt,
- der für die Abbremsung aus der gemessenen Relativgeschwindigkeit zum Stillstand bis zum Ende des Verfahrweges erforderliche Verlauf der Geschwindigkeit wird zumindest einmal berechnet,
- aus der ermittelten Relativgeschwindigkeit und dem berechneten Geschwindigkeitsverlauf wird der Stromfluss derart berechnet, dass beim weiteren Verfahren der zueinander bewegbaren Teile der berechnete erforderliche Verlauf der Geschwindigkeit angenähert erreicht wird.

3. Verfahren nach einem der vorhergehenden Ansprüche, **dadurch gekennzeichnet, dass** die Ermittlung der Relativgeschwindigkeit wiederholt durchgeführt wird und bei jeder Messung der noch verfügbare Verfahrweg ermittelt wird.

4. Verfahren nach einem der vorhergehenden Ansprüche, **dadurch gekennzeichnet, dass** die Relativgeschwindigkeit und/oder der noch verfügbare Verfahrweg aus den Signalen eines Wegsensors berechnet werden, der die relative Position der zueinander bewegbaren Teile der Lenksäule erfasst.

5. Verfahren nach einem der vorhergehenden Ansprüche, **dadurch gekennzeichnet, dass** vor und / oder während dem Unfall bestimmbare Parameter, wie beispielsweise Geschwindigkeit oder Fahrergewicht ermittelt werden und auf dieser Basis Reglerparameter des Regelverfahrens verändert werden.

6. Verfahren nach einem der vorhergehenden Ansprüche, **dadurch gekennzeichnet, dass** die Dämpfungskraft während der Zündung eines Airbags erhöht wird.

7. Vorrichtung zur Regelung eines steuerbaren Energieabsorbers (5) für ein Lenksystem in einem Kraftfahrzeug, umfassend eine Kolben-Zylindereinheit (25), durch die eine magnetorheologischen Flüssigkeit (21) im Falle eines Crashs durch eine Engstelle (22) gedrückt wird, wobei die Viskosität der magnetorheologischen Flüssigkeit an der Engstelle durch den Stromfluss durch eine Spule (20) veränderbar ist, wodurch die Dämpfungskraft einstellbar ist, **dadurch gekennzeichnet, dass** eine Sensoreinheit (2) zur Ermittlung der Relativposition des bewegbaren Teils (23) der Lenksäule zu dem karosseriefesten Teil (24) der Lenksäule vorgesehen ist.

8. Vorrichtung nach Anspruch 7, **dadurch gekennzeichnet, dass** die Sensoreinheit zur Ermittlung der Relativposition des bewegbaren Teils der Lenksäule in dem Energieabsorber integriert ist.

## Claims

1. Control method for a controllable energy absorber (5) in a steering system for a motor vehicle, wherein a current flow in a coil (20) is controllable in the energy absorber, said coil (20) controlling the viscosity of a magnetorheological fluid (21) of the controllable energy absorber, wherein, during an accident, the energy absorber acts as a hydraulic damper between two parts (23, 24) which can be moved relative to each other, the damping force of which is determined by the current flow through the magnetic coil, **characterised in that** the following steps are provided:
- the relative speed between a first part (23) of the steering column which can be moved with the steering wheel (26) and a second part (24) of the steering column which is fixed to the body is determined continuously or at intervals,
- the acceleration required for the deceleration from the measured relative speed to a standstill by the end of the travel path is calculated,
- the current flow is calculated from the calculated acceleration in such a way that the value of the calculated acceleration is approximately achieved during further travel of the parts which can be moved relative to each other.

2. Control method for a controllable energy absorber (5) in a steering system for a motor vehicle, wherein a current flow in a coil (20) is controllable in the energy absorber, said coil (20) controlling the viscosity of a magnetorheological fluid (21) of the controllable energy absorber, wherein, during an accident, the energy absorber acts as a hydraulic damper between two parts (23, 24) which can be moved relative to each other, the damping force of which is determined by the current flow through the magnetic coil, **characterised in that** the following steps are provided:
- the relative speed between a first part (23) of the steering column which can be moved with the steering wheel and a second part (24) of the steering column which is fixed to the body is determined continuously or at intervals,
- the course of the speed required for the deceleration from the measured relative speed to a standstill by the end of the travel path is calculated at least once,
- the current flow is calculated from the determined relative speed and the calculated speed course in such a way that the calculated required course of the speed is approximately achieved during further travel of the parts which can be moved relative to each other.

3. Method according to one of the preceding claims, **characterised in that** the determination of the relative speed is carried out repeatedly and the still available travel path is determined with each measurement.

4. Method according to one of the preceding claims, **characterised in that** the relative speed and/or the still available travel path are calculated from the signals of a displacement sensor which detects the relative position of the parts of the steering column which can be moved relative to each other.

5. Method according to one of the preceding claims, **characterised in that** parameters which can be determined before and/or during the accident, such as, for example speed or driver weight, are determined and control parameters of the control method are changed on this basis.

6. Method according to one of the preceding claims, **characterised in that** the damping force is increased during the ignition of an airbag.

7. Device to control a controllable energy absorber (5) for a steering system in a motor vehicle, comprising a piston-cylinder unit (25), using which a magnetorheological fluid (21) is pushed through a constriction (22) in the event of a crash, wherein the viscosity of the magnetorheological fluid at the constriction can be changed by the current flow through a coil (20), whereby the damping force is adjustable, **characterised in that** a sensor unit (2) to determine the relative position of the moveable part (23) of the steering column relative to the part (24) of the steering column which is fixed to the body is provided.

8. Device according to claim 7, **characterised in that** the sensor unit to determine the relative position of the moveable part of the steering column is integrated into the energy absorber.

## Revendications

1. Procédé pour le réglage d'un absorbeur d'énergie contrôlable (5) dans un système de direction pour un véhicule automobile, où dans l'absorbeur d'énergie l'on peut régler le flux de courant d'une bobine (20) qui active la viscosité d'un liquide magnétorhéologique (21) de l'absorbeur d'énergie contrôlable, l'absorbeur d'énergie agissant pendant un accident comme amortisseur hydraulique entre deux parties mobiles (23, 24) l'une par rapport à l'autre, dont la force d'amortissement est déterminée par le flux de courant traversant la bobine magnétique, **caractérisé en ce que** les étapes suivantes sont prévues :
- la vitesse relative entre une première partie (23), mobile avec le volant (26), de la colonne de direction et une seconde partie (24), solidaire de la carrosserie, de la colonne de direction est déterminée de façon continue ou par intermittence,
- l'accélération qui est nécessaire pour le freinage à partir de la vitesse relative mesurée pour l'arrêt jusqu'à la fin du trajet de déplacement est calculée,
- le flux de courant est calculé à partir de l'accélération calculée, de telle sorte que, lors d'un autre déplacement des parties mobiles entre elles, la valeur de l'accélération calculée est atteinte de façon rapprochée.

2. Procédé pour le réglage d'un absorbeur d'énergie contrôlable (5) dans un système de direction pour un véhicule automobile, où dans l'absorbeur d'énergie l'on peut régler le flux de courant d'une bobine (20) qui active la viscosité d'un liquide magnétorhéologique (21) d'un absorbeur d'énergie contrôlable, l'absorbeur d'énergie agissant pendant un accident comme amortisseur hydraulique entre deux parties mobiles (23, 24) l'une par rapport à l'autre, dont la force d'amortissement est déterminée par le flux de courant traversant la bobine magnétique, **caractérisé en ce que** les étapes suivantes sont prévues :
- la vitesse relative entre une première partie (23), mobile avec le volant, de la colonne de direction et une seconde partie (24), solidaire de la carrosserie, de la colonne de direction est déterminée de façon continue ou par intermittence,
- la progression de la vitesse qui est nécessaire pour le freinage à partir de la vitesse relative mesurée pour l'arrêt jusqu'à la fin du trajet de déplacement est calculée au moins une fois,
- le flux de courant est calculé à partir de la vitesse relative déterminée et de la progression de la vitesse calculée de telle sorte que, lors d'un autre déplacement des parties mobiles entre elles, la valeur de l'évolution de la vitesse nécessaire calculée est atteinte de façon rapprochée

3. Procédé selon une des revendications précédentes, **caractérisé en ce que** la détermination de la vitesse relative est effectuée de manière répétée et qu'à chaque mesure l'on détermine le trajet encore disponible.

4. Procédé selon une des revendications précédentes, **caractérisé en ce que** la vitesse relative et/ou le trajet encore disponible sont calculés à partir des signaux d'un capteur de course qui saisit la position relative des parties mobiles entre elles de la colonne de direction.

5. Procédé selon une des revendications précédentes, **caractérisé en ce qu'**avant et/ou pendant l'accident certains paramètres, comme par exemple la vitesse ou le poids du conducteur, sont déterminés et que sur cette base l'on modifie les paramètres de réglage du procédé de réglage.

6. Procédé selon une des revendications précédentes, **caractérisé en ce que** la force d'amortissement pendant l'activation d'un airbag est augmentée.

7. Dispositif pour le réglage d'un absorbeur d'énergie contrôlable (5) dans un système de direction pour un véhicule automobile, comprenant un ensemble cylindre-piston (25), à travers lequel l'on presse, en cas de collision, un liquide magnétorhéologique (21) à travers une partie d'étranglement (22), où la viscosité du liquide magnétorhéologique au niveau de la partie d'étranglement est modifiable par le flux de courant traversant une bobine (20), grâce à quoi l'on peut régler la force d'amortissement, **caractérisé en ce que** l'on prévoit une unité capteur (2) pour déterminer la position relative des parties mobiles (23) de la colonne de direction par rapport à la partie solidaire (24) de la carrosserie de la colonne de direction.

8. Dispositif selon la revendication 7, **caractérisé en ce que** l'unité capteur pour déterminer la position relative des parties mobiles de la colonne de direction est intégrée dans l'absorbeur d'énergie.
